# EUROPÄISCHE PATENTSCHRIFT

(11) **EP 4 515 122 B1**
(45) Veröffentlichungstag und Bekanntmachung des Hinweises auf die Patenterteilung: **11.02.2026**
(21) Anmeldenummer: 23720534.9
(22) Anmeldetag: 13.04.2023
(51) Int. Cl.: F16H 57/025, F16H 57/03, F16H 57/04

(54) **GETRIEBE MIT GEHÄUSETEILEN, INSBESONDERE MIT ZWEI ZUEINANDER IDENTISCH AUSGEFÜHRTEN GEHÄUSETEILEN**
TRANSMISSION WITH HOUSING PARTS, IN PARTICULAR TWO IDENTICALLY DESIGNED HOUSING PARTS
TRANSMISSION AVEC PARTIES DE BOÎTIER, EN PARTICULIER DEUX PARTIES DE BOÎTIER CONÇUES DE MANIÈRE IDENTIQUE

(30) Priorität: 28.04.2022 CN 202210469570; 04.07.2022 DE 102022002401
(43) Veröffentlichungstag der Anmeldung: 05.03.2025
(73) Patentinhaber: SEW-EURODRIVE GmbH & Co. KG, 76646 Bruchsal (DE)
(72) Erfinder: WU, Zili, TIANJIN, 300381 (CN)
(86) Internationale Anmeldenummer: PCT/EP2023/025174
(87) Internationale Veröffentlichungsnummer: WO 2023/208414

(56) Entgegenhaltungen:
- CN-U- 212 744 987
- DE-A1- 102008 004 337
- DE-C- 818 716

## Beschreibung

Die Erfindung betrifft ein Getriebe mit Gehäuseteilen, insbesondere mit zwei zueinander identisch ausgeführten Gehäuseteilen.

Es ist allgemein bekannt, dass ein Getriebe ein Gehäuse aufweist.

Aus der CN 111 998 059 A ist ein Getriebegehäuse dargestellt.

Aus der DE 10 2013 018 709 A1 ist ein Gehäuse für ein Getriebe bekannt.

Aus der DE 10 2013 000 518 A1 ist ein Getriebe mit einem Gehäuse bekannt.

Aus der DE 10 2008 004 337 A1 ist ein Gehäuse für ein Getriebe bekannt.

Aus der DE 10 2004 030 180 A1 ist ein Stirnradgetriebe bekannt.

Aus der DE 818 716 U ist als nächstliegender Stand der Technik ein Gehäuse für ein Schneckengetriebe bekannt.

Aus der CN 212744987 U ist ein Getriebe bekannt.

Der Erfindung liegt daher die Aufgabe zugrunde, ein Getriebe mit Gehäuse weiterzubilden, wobei das Gehäuse kompakt, kostengünstig und einfach herstellbar sein soll und das Getriebe in unterschiedlichen Orientierungen betreibbar sein soll.

Erfindungsgemäß wird die Aufgabe bei dem Getriebe nach den in Anspruch 1 angegebenen Merkmalen gelöst.

Wichtige Merkmale der Erfindung bei dem Getriebe sind, das das Getriebe mit zwei zueinander identisch ausgeführten Gehäuseteilen. ausgeführt ist,
wobei die beiden Gehäuseteile miteinander verbunden sind,
wobei an jedem Gehäuseteil Kühlrippen ausgebildet sind,
wobei Fußplatten, zum Aufstellen des Getriebes auf einer vorzugsweise ebenen Bodenfläche, von Stegen gehalten sind, welche mit einem jeweiligen Gehäuseteil verbunden sind, insbesondere schweißverbunden sind,
wobei jeder Steg Kühlrippen umgreift, welche zwischen dem Gehäuseteil und dem Steg hindurchragen,
wobei die Fußplatten vom Gehäuseteil beabstandet sind.
insbesondere wobei die Fußplatten mit den Stegen schweißverbunden sind.

Von Vorteil ist dabei, dass die Fußplatten mittels der Stege von dem Gehäuseteil beabstandet sind und somit ein Kühlluftstrom zwischen dem Gehäuseteil, dem Bodenbereich und den Stegen durchleitbar ist. Somit ist das Getriebe effizient entwärmbar und dadurch auf kleinem Bauraum eine hohe Leistung ermöglicht, also das Getriebe kompakt ausgeführt. Durch die Verwendung zweier identischer, also stets gleicher, Gehäuseteile ist eine Vielzahl von solchen Gehäuseteilen serienfertigbar und dadurch sind die Kosten verringerbar. Außerdem ist die Herstellung sehr einfach, da nur zwei baugleiche Gehäuseteile miteinander zu verbinden sind, um das Gehäuse des Getriebes herzustellen.

Da die beiden Gehäuseteile identisch zueinander sind, ist durch Invertieren des Gehäuses, also derartiges Drehen um 180°, dass das obere Gehäuseteil als unteres Gehäuseteil fungiert und das untere Gehäuseteil als oberes Gehäuseteil fungiert, eine andere Orientierung des Getriebes ermöglicht. In beiden Orientierungen arbeitet das Getriebe aber in der vorgesehenen Weise. Insbesondere ist auch der Ölkreislauf funktionstüchtig, indem die Wellenendpumpe Öl aus dem Ölsumpf ansaugt und durch einen Ölfilter drückt, wonach es dann in den Innenraum zugeführt wird. Die Verrohrung ist dabei derart ausgeführt, dass auch beim Invertieren der Betrieb ungestört ausführbar ist.

Bei einer vorteilhaften Ausgestaltung ist jeder Steg U-förmig und/oder weist zwei voneinander beabstandete und jeweils mit einem Joch des Stegs verbundene Schenkelbereiche auf,
insbesondere wobei ein erster Schenkelbereich des jeweiligen Stegs mit dem jeweiligen Gehäuseteil verbunden ist und der andere Schenkelbereich des jeweiligen Stegs mit einer jeweiligen Fußplatte verbunden ist. Von Vorteil ist dabei, dass die Stege als Verbindungbereiche fungieren und das Joch als Beabstandungsbereich. Auf diese Weise ist das Gehäuseteil vom Bodenbereich beabstandet und somit ein Kühlluftstrom unterhalb des Gehäuseteils durchleitbar.

Bei einer vorteilhaften Ausgestaltung sind die Kühlrippen zwischen dem jeweiligen Joch und dem jeweiligen Gehäuseteil angeordnet,
insbesondere wobei das Joch vom Gehäuseteil beabstandet ist. Von Vorteil ist dabei, dass der Kühlluftstrom zwischen den Kühlrippen vom Gehäuseteil aus gesehen unterhalb des Jochs beziehungsweise Stegs durchführbar ist.

Bei einer vorteilhaften Ausgestaltung sind die Stege voneinander beabstandet und sind entlang einer geraden Linie hintereinander angeordnet. Von Vorteil ist dabei, dass der Kühlluftstrom vom Gehäuseteil aus gesehen unterhalb der Stege durchleitbar ist, insbesondere in zur Richtung der Drehachse der eintreibenden Welle paralleler Richtung.

Bei einer vorteilhaften Ausgestaltung sind die entlang der geraden Linie hintereinander angeordneten Stege zueinander identisch ausgeführt mit Ausnehme eines ersten Stegs, an welchem zusätzlich eine Öse angeformt ist, und eines zweiten Stegs, an welchem zusätzlich eine Öse angeformt ist. Von Vorteil ist dabei, dass ein Transport einfach ausführbar ist. außerdem ist die Öse auch bei der Montage verwendbar und vereinfacht die Montage.

Bei einer vorteilhaften Ausgestaltung sind die Lageraufnahmen des Getriebes zur Hälfte im ersten Gehäuseteil ausgebildet und die jeweilige andere Hälfte der Lageraufnahmen sind im zweiten Gehäuseteil ausgebildet,
wobei die Lageraufnahmen eine größere, insbesondere mindestens fünfmal größere Wandstärke aufweisen als die Wandung des restlichen Gehäuseteils. Von Vorteil ist dabei, dass die Lageraufnahmen geteilt sind, also nicht in einem einzigen Teil, sondern hälftig in jedem der Teile anordenbar sind.

Bei einer vorteilhaften Ausgestaltung ist der erste Schenkel des jeweiligen Stegs mit einer Lageraufnahme verbunden und der andere Schenkel des jeweiligen Stegs mit einer der Fußplatten des Getriebes. Von Vorteil ist dabei, dass die Fußplatten beabstandet sind vom Gehäuseteil und somit ein Kühlluftstrom dazwischen durchführbar ist.

Bei einer vorteilhaften Ausgestaltung ist die Berührfläche der beiden Gehäuseteile in einer Trennebene, insbesondere Splitebene, enthalten,
wobei die Fußplatten jeweils parallel zur Trennebene des Getriebes ausgerichtet sind. Von Vorteil ist dabei, dass die Trennebene die Lageraufnahmen halbiert und somit eine einfache Schnittstelle zwischen den beiden Gehäuseteilen erzeugt ist.

Bei einer vorteilhaften Ausgestaltung ist jedes Gehäuseteil mit jeweils zwei Fußplatten verbunden. Von Vorteil ist dabei, dass ein stabiles Aufstellen des Getriebes ermöglicht ist.

Bei einer vorteilhaften Ausgestaltung ist die erste und/oder eintreibende Getriebestufe des Getriebes eine Winkelgetriebestufe
und die Kühlrippen sind parallel zur Drehachse der eintreibenden Welle des Getriebes, insbesondere der Winkelgetriebestufe, ausgerichtet,
insbesondere wobei die eintreibende Welle senkrecht zur abtreibenden Welle des Getriebes ausgerichtet ist. Von Vorteil ist dabei, dass ein Lüfter von der eintreibenden Welle antreibbar ist, der einen Luftstrom entlang der Kühlrippen parallel zur Drehachse der eintreibenden Welle fördert.

Bei einer vorteilhaften Ausgestaltung ist an einer Welle des Getriebes, insbesondere an einer Zwischenwelle des Getriebes, eine Wellenendpumpe angeordnet und von der Welle angetrieben,
wobei die Wellenendpumpe mit einem Mehrwegeventil, insbesondere Dreiwegeventil oder Zweiwegeventil, verbunden ist,
wobei ein erster Anschluss der Wellenendpumpe über das Mehrwegeventil, insbesondere abhängig vom Schaltzustand des Mehrwegeventils,
   - wahlweise mit einer ersten Ölrohrleitung verbunden ist, die in einer durch die Wandung des ersten Gehäuseteils durchgehenden Bohrung mündet,
   - oder mit einer zweiten Ölrohrleitung verbunden ist, die in einer durch die Wandung des zweiten Gehäuseteils durchgehenden Bohrung mündet, insbesondere sodass das Öl von der Wellenendpumpe aus dem Ölsumpf des Getriebes ansaugbar ist, insbesondere bei entsprechendem Schaltzustand des Mehrwegeventils.
Von Vorteil ist dabei, dass die Wellenendpumpe Öl aus dem Ölsumpf ansaugt, wobei das Getriebe in der ersten oder zweiten Orientierung aufgestellt ist, also entweder mit dem ersten Gehäuseteil als unteres Gehäuseteil oder alternativ mit dem zweiten Gehäuseteil als unterem Gehäuseteil.

Bei einer vorteilhaften Ausgestaltung ist der zweite Anschluss der Wellenendpumpe über eine Ölleitung mit einem Ölfilter verbunden, von welchem eine weitere Ölleitung zu einer durch das erste Gehäuseteil durchgehenden Bohrung führt,
insbesondere wobei der erste Anschluss der Wellenendpumpe über ein Sicherheitsventil, insbesondere Überdruckventil, mit dem zweiten Anschluss der Wellenendpumpe verbunden ist. Von Vorteil ist dabei, dass das Öl gefiltert wird. Außerdem befindet sich das Ölfilter an der Außenseite des Getriebes, so dass das Öl gekühlt wird.

Bei einer vorteilhaften Ausgestaltung ist ein Lüfter mit der eintreibenden Welle verbunden,
wobei eine Lüfterhaube mit den beiden Gehäuseteilen verbunden ist und den Lüfter zumindest teilweise gehäusebildend umgibt,
insbesondere wobei der vom Lüfter geförderte Luftstrom entlang der Kühlrippen geleitet wird. Von Vorteil ist dabei, dass ein passiv angetriebener Lüfter verwendbar ist und somit bei hoher Drehzahl ein stärkerer Kühlluftstrom erzeugbar ist.

Bei einer vorteilhaften Ausgestaltung sind an einem jeweiligen der Gehäuseteile zumindest zwei voneinander beabstandete Fußplatten angeordnet,
insbesondere wobei die mit dem jeweiligen Gehäuseteil verbundenen Fußplatten zueinander parallel ausgerichtet sind. Von Vorteil ist dabei, dass an jeder Längsseite des Gehäuseteils eine Fußplatte vorsehbar ist. Somit ist ein stabiles Aufstellen ermöglicht.

Bei einer vorteilhaften Ausgestaltung ist entweder das erste Gehäuseteil in Gravitationsrichtung unterhalb des zweiten Gehäuseteils angeordnet und/oder das erste Gehäuseteil ist mit seinen Fußflächen auf einer Bodenfläche aufgestellt
oder das zweite Gehäuseteil ist in Gravitationsrichtung unterhalb des ersten Gehäuseteils angeordnet und/oder das zweite Gehäuseteil mit seinen Fußflächen auf einer Bodenfläche aufgestellt. Von Vorteil ist dabei, dass das Getriebe in zwei Orientierungen aufstellbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

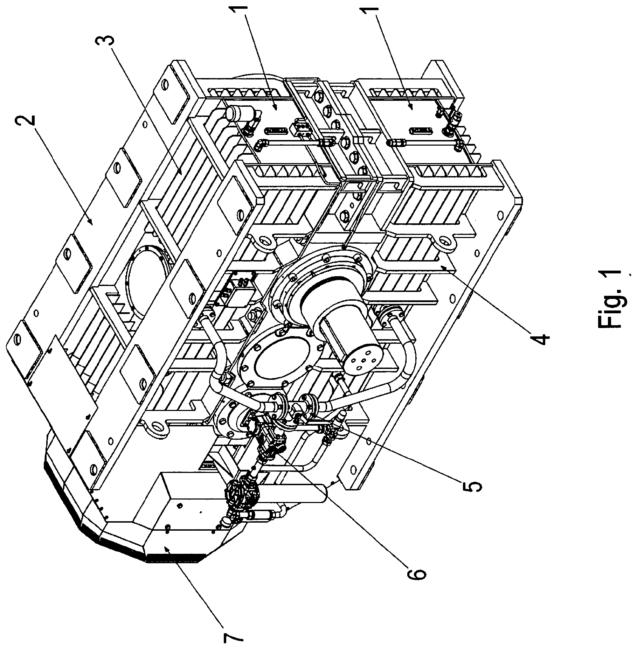

In der Figur 1 ist ein erfindungsgemäßes Getriebe in Schrägansicht dargestellt.

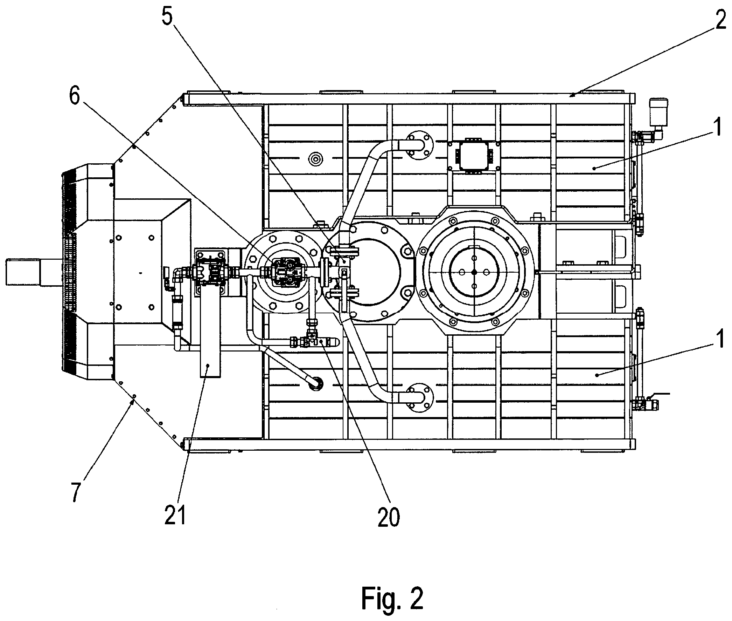

In der Figur 2 ist das Getriebe in Seitenansicht dargestellt.

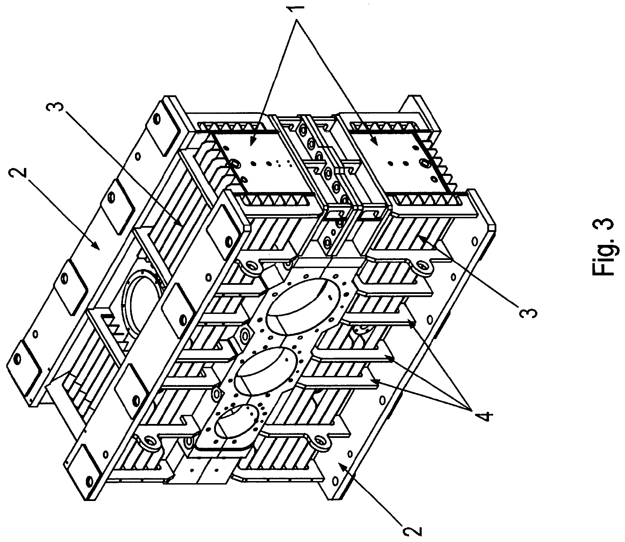

In der Figur 3 ist das Gehäuse des Getriebes in Schrägansicht aus einer ersten Blickrichtung dargestellt.

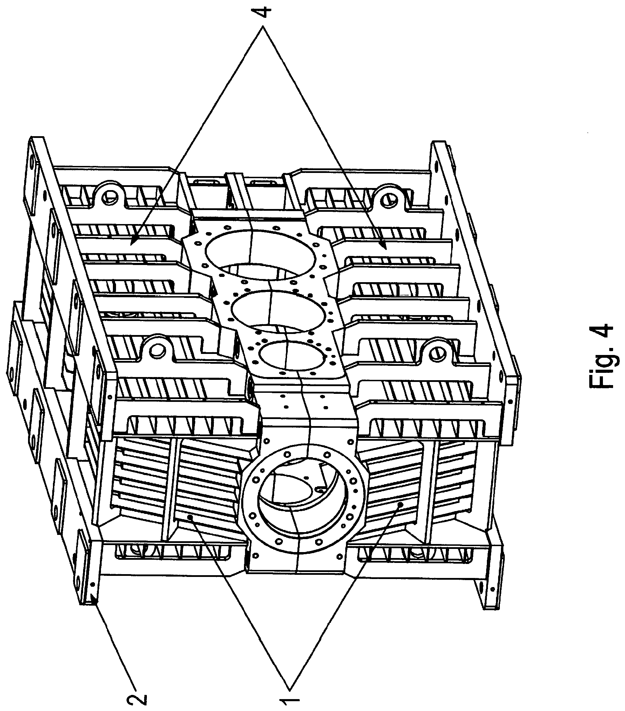

In der Figur 4 ist das Gehäuse im Unterschied zur Figur 3 aus einer anderen Blickrichtung dargestellt.

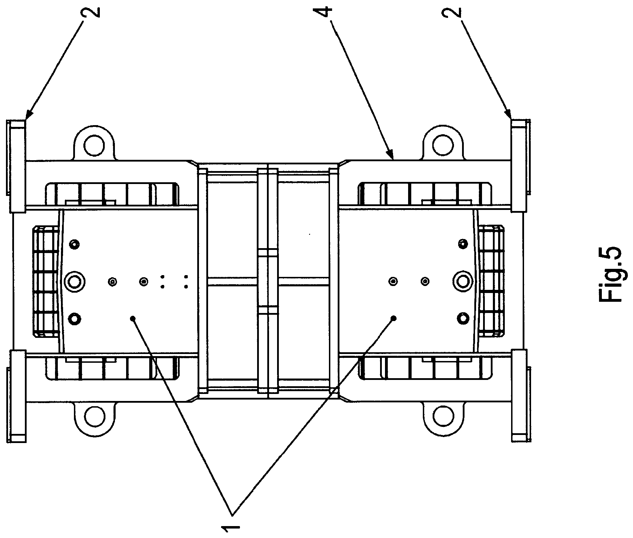

In der Figur 5 ist eine Vorderansicht des Getriebes dargestellt.
In der Figur 6 ist das Getriebe nochmals in Seitenansicht dargestellt.
In der Figur 7 ist das invertierte, also um 180° gedrehte Getriebe in Seitenansicht dargestellt.

Wie in den Figuren dargestellt, weist das Getriebe ein aus zwei zueinander identisch ausgebildeten Gehäuseteilen 1 zusammengesetztes Gehäuse auf.

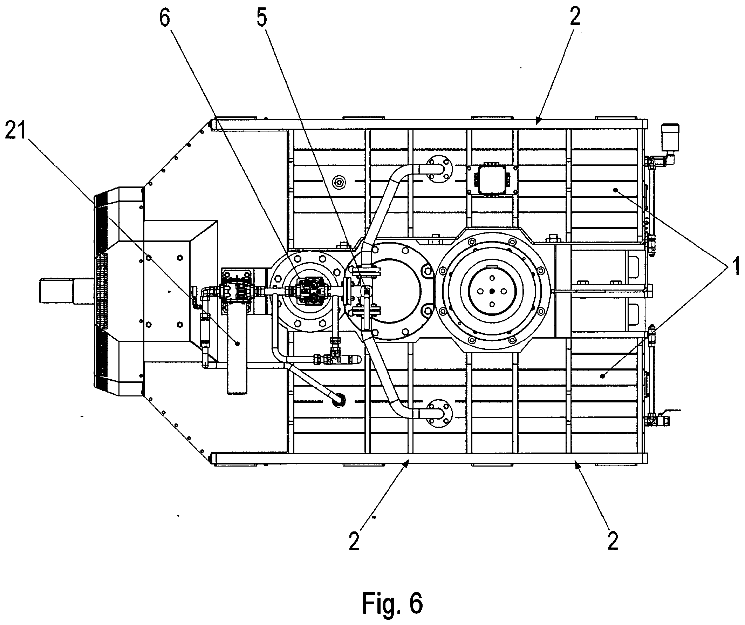

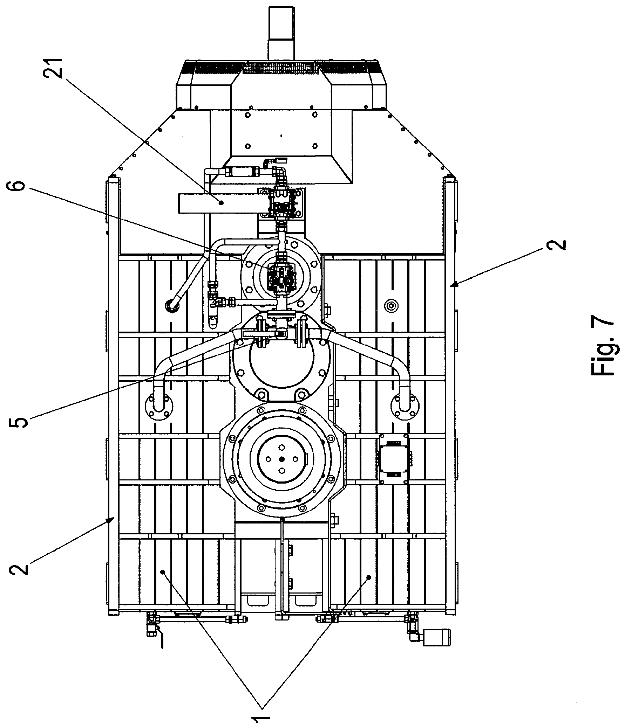

Daher ist das Getriebe, wie durch Vergleich der Figuren 6 und 7 leicht erkennbar, invertiert auf dem Boden aufstellbar, also um 180° gedreht. Denn jedes der beiden Gehäuseteile 1 ist mit einer Fußplatte 2 verbunden, mittels derer das Getriebe auf dem Boden aufstellbar ist.

Jedes der Gehäuseteile 1 ist an seiner Außenseite mit Kühlrippen 3 ausgebildet.

Stege 4, welche die Kühlrippen umgreifen, sind sowohl mit dem jeweiligen Gehäuseteil 1 als auch mit der Fußplatte 2 des jeweiligen Gehäuseteils 1 verbunden.

Das Gehäuse fungiert somit als Splitgehäuse.

Auf das erste der beiden Gehäuseteile 1 ist das zweite der beiden Gehäuseteile 1 aufgesetzt, so dass die gegenseitige Berührfläche der beiden Gehäuseteile 1 in der Splitebene enthalten ist.

Die Lageraufnahmen zur Aufnahme von Wälzlagern für die Wellen des Getriebes, insbesondere für die abtreibende Welle, mindestens eine Zwischenwelle und die eintreibende Welle des Getriebes sind ebenfalls durch die Splitebene geteilt, insbesondere wobei die jeweilige Hälfte der Lageraufnahme im ersten Gehäuseteil 1 und die andere Hälfte jeweils im anderen Gehäuseteil 1 angeordnet ist.

Die Stege 4 sind vorzugsweise einerseits verschweißt mit einer jeweiligen Fußplatte 2 und andererseits mit dem jeweiligen Gehäuseteil 1.

Die Stege 4 umgreifen die Kühlrippen 3 derart, dass die jeweiligen Kühlrippen 3 zwischen den jeweiligen Stegen 4 und dem jeweiligen Gehäuseteil angeordnet sind.

Die vom jeweiligen Steg 4 umfassten Kühlrippen 3 sind zueinander beabstandet und zueinander parallel angeordnet. Die zwischen den Kühlrippen 3 ausgebildeten Kühlkanäle führen somit zwischen dem jeweiligen Steg 4 und dem jeweiligen Gehäuseteil 1 hindurch.

An einer jeweiligen Seite des jeweiligen Gehäuseteils 1 sind die Stege 4 entlang einer geraden Linie hintereinander aufgereiht angeordnet.

Vorzugsweise sind die Stege 4 zueinander identisch ausgeführt, wobei allerdings entlang der Linie ein erster der Stege 4 zusätzlich eine nach außen hervorragende Öse aufweist und auch ein letzter der Stege 4 eine nach außen hervorragende Öse aufweist.

Mittels der Stege 4 ragen die Fußteile zum Boden hin über das Gehäuseteil hervor. Denn die jeweiligen Stege 4 sind am jeweiligen Gehäuseteil 1 befestigt und halten die jeweilige Fußplatte 2.

Außerdem sind auch an der dem Boden zugewandten Seite des Gehäuseteils 1 Kühlrippen ausgebildet, welche voneinander beabstandet sind und sich parallel erstrecken, insbesondere senkrecht zur Richtung der Drehachse der abtreibenden Welle des Getriebes.

Durch die Beabstandung der Fußplatten 2 vom Gehäuseteil 1 ist zwischen dem Boden, insbesondere also der möglichst ebenen Bodenfläche des Bodens, und dem Gehäuseteil 1 ein von den Rippen geführter Luftstrom durchleitbar.

Dass aus den beiden Gehäuseteilen 1 zusammengesetzte Getriebegehäuse weist also an fast allen Seiten Kühlrippen 3 auf. Somit ist eine verbesserte Entwärmung gewährleistet.

Wie oben beschrieben, ist parallel zur Drehachse der eintreibenden Welle am Getriebegehäuse an allen Seiten ein Luftstrom entlangführbar, der zwischen Kühlrippen 3 entlangströmt.

Den Fußplatten 2 desjenigen Gehäuseteils 1, welches auf der vom Boden abgewandten Seite des auf dem Boden aufgestellten Gehäuseteils 1 angeordnet ist, wirken als zusätzliche Kühlfahnen oder Kühlrippen, da sie die Oberfläche ebenfalls vergrößern.

Die Wandstärke des jeweiligen Gehäuseteils 1 im Bereich der Lageraufnahmen ist größer, insbesondere mindestens fünfmal größer, als die Wandstärke des Gehäuseteils 1 in demjenigen Bereich des Gehäuseteils 1, in welchem die Kühlrippen angeordnet sind.

Diese Bereiche der Lageraufnahmen ragen insbesondere infolge der verdickten Wandstärke, in die Umgebung hervor, insbesondere über die Kühlrippen 4 hinaus.

Die Stege 4 sind an diesen Bereichen der Lageraufnahmen befestigt, insbesondere angeschweißt. Insbesondere ragen die Stege 4 daher auch über die Kühlrippen in die Umgebung hervor.

Jeder Steg 4 ist U-förmig oder weist zumindest eine U-förmige Grundstruktur auf.

Die Drehachse der eintreibenden Welle ist senkrecht zur Drehachse der abtreibenden Welle ausgerichtet. Somit ist die erste Getriebestufe als Winkelgetriebestufe ausgeführt und die weiteren Getriebestufen sind Parallelwellengetriebestufen, insbesondere Stirnradgestriebestufen.

Das jeweilige Gehäuseteil 1 ist im Bereich der ersten Getriebestufe abgeschrägt ausgeführt. Somit ist die erste Getriebestufe vorzugsweise als Kegelgetriebestufe ausgeführt.

Die Schräge an der Vorderseite des Gehäuseteils 1 ist derart ausgeführt, dass das Gehäuseteil an der Vorderseite von der Lageraufnahme für das Lager der eintreibenden Welle mit abnehmendem Abstand zu den Fußplatten 2 einen vorzugsweise streng monoton abnehmenden Abstand zur abtreibenden Welle aufweist.

An der ersten Zwischenwelle des Getriebes, also an der abtreibenden Welle der ersten Getriebestufe, ist eine Wellenendpumpe angeordnet.

Der von der Wellenendpumpe geförderte Ölfluss wird durch ein Ölfilter 21 geleitet und von dort zurück in den Ölsumpf des Getriebes.

Die Wellenendpumpe 6 und das Ölfilter sind außen am Getriebe anmontiert und/oder von der äußeren Umgebung her zugänglich

Die dafür notwendige Ölleitung von der Wellenendpumpe zum Ölfilter 21 ist an der Außenseite des Getriebes befestigt. Die Ölleitung von dem Ölfilter zurück zum Ölsumpf hin ist ebenfalls an der Außenseite befestigt und mündet in einer durch das Gehäuseteil 1 durchgehenden Bohrung.

Wie in der Figur 6 gezeigt, ist ein Mehrwegeventil, insbesondere Dreiwegeventil, an der Außenseite des Getriebes befestigt, so dass die Ansaugseite der Wellenendpumpe 6 wahlweise mit einer ersten Ölrohrleitung verbunden ist, die in einer durch die Wandung des ersten Gehäuseteils durchgehenden Bohrung mündet, oder mit einer zweiten Ölrohrleitung verbunden ist, die in einer durch die Wandung des zweiten Gehäuseteils durchgehenden Bohrung mündet. Somit ist das Öl von der Wellenendpumpe aus dem Ölsumpf ansaugbar, wobei das Mehrwegeventil entsprechend eingestellt werden muss.

Wie in Figur 7 gezeigt, ist das Getriebe aber auch dann betreibbar, wenn es um 180° gedreht, insbesondere also auf den Kopf gestellt, ist. Denn es muss dann nur das Mehrwegeventil 5 umgestellt werden, so dass Öl aus dem nun im anderen Gehäuseteil 1 sich befindenden Ölsumpf von der Wellenendpumpe ansaugbar ist.

Das durch das Ölfilter 21 hindurchgeförderte Öl wird bei der Ausführung nach Figur 7 durch eine Bohrung des oberen Gehäuseteils 1 in den Innenraum zugeführt.

Mit der eintreibenden Welle ist ein Lüfter drehfest verbunden. Eine Luftleithaube 7 lenkt den vom Lüfter geförderten Luftstrom entlang der Kühlrippen 3, so dass an allen vier Seiten des im Wesentlichen quaderförmigen Gehäuseteils 1 ein Luftstrom entlang sich bewegt.

Die Lüfterhaube 7 ist vorzugsweise mit beiden Gehäuseteilen 1 verbunden und deckt die abgeschrägten Bereiche ab.

Vorzugsweise befinden sich die Ölrohre und Ölleitungen im vom Lüfter geförderten Luftstrom, so dass das von der Wellenendpumpe geförderte Öl ebenfalls gekühlt wird.

Vorzugsweise ist die Ansaugseite der Wellenendpumpe über ein Sicherheitsventil 20, insbesondere Überdruckventil, mit der Druckseite der Wellenendpumpe 6 verbunden.

Bei weiteren erfindungsgemäßen Ausführungsbeispielen wird in Figur 6 die Wellenendpumpe umgekehrt betrieben, so dass das Öl aus dem Ölsumpf des ersten Gehäuseteils 1, also des unteren Gehäuseteils 1, angesaugt und durch das Ölfilter 21 der Wellenendpumpe zugeführt wird. Das von der Wellenendpumpe geförderte Öl wird dann dem anderen Gehäuseteil 1 zugeführt, indem die Ölrohrleitung vom Mehrwegeventil 5 zur Bohrung des oberen Gehäuseteils 1 führt.

Vorzugsweise sind im Innenraum des Getriebes Ölleitungen angeordnet, die das durch die Bohrung zugeführte Öl zu Schmierstellen, insbesondere also Lagern und Verzahnungen, führen. Das Öl fließt also gravitativ angetrieben zu den Schmierstellen.

Bei der Ausführung nach Figur 7, also bei im Vergleich zur Figur 6 auf den Kopf gestelltem Getriebe, bleibt die Wellenendpumpe gleichartig betrieben und die Ölführung gleichartig wie bei Figur 6.

### Bezugszeichenliste

- 1: Gehäuseteil
- 2: Fußplatte
- 3: Kühlrippen
- 4: Steg
- 5: Mehrwegeventil
- 6: Wellenendpumpe
- 7: Luftleithaube
- 20: Sicherheitsventil, insbesondere Überdruckventil
- 21: Ölfilter

## Patentansprüche

1. Getriebe mit zwei zueinander identisch ausgeführten Gehäuseteilen (1),
wobei die beiden Gehäuseteile (1) miteinander verbunden sind,
wobei Fußplatten (2) zum Aufstellen des Getriebes auf einer vorzugsweise ebenen Bodenfläche von Stegen (4) gehalten sind, welche mit einem jeweiligen Gehäuseteil (1) (1) verbunden sind, insbesondere schweißverbunden sind,
wobei die Fußplatten (2) vom Gehäuseteil (1) beabstandet sind,
insbesondere wobei die Fußplatten (2) mit den Stegen (4) schweißverbunden sind
**dadurch gekennzeichnet, dass**
an jedem Gehäuseteil (1) Kühlrippen (3) ausgebildet sind,
wobei jeder Steg (4) Kühlrippen (3) umgreift, welche zwischen dem Gehäuseteil (1) und dem Steg (4) hindurchragen.

2. Getriebe nach Anspruch 1,
**dadurch gekennzeichnet, dass**
jeder Steg (4) U-förmig ist und/oder zwei voneinander beabstandete und jeweils mit einem Joch des Stegs (4) verbundene Schenkelbereiche aufweist.

3. Getriebe nach Anspruch 2,
**dadurch gekennzeichnet, dass**
die Kühlrippen (3) zwischen dem jeweiligen Joch und dem jeweiligen Gehäuseteil (1) angeordnet sind.

4. Getriebe nach einem der vorangegangenen Ansprüche,
**dadurch gekennzeichnet, dass**
die Stege (4) voneinander beabstandet sind und entlang einer geraden Linie hintereinander angeordnet sind.

5. Getriebe nach Anspruch 4,
**dadurch gekennzeichnet, dass**
die entlang der geraden Linie hintereinander angeordneten Stege (4) zueinander identisch ausgeführt sind mit Ausnehme eines ersten Stegs (4), an welchem zusätzlich eine Öse angeformt ist, und eines zweiten Stegs (4), an welchem zusätzlich eine Öse angeformt ist.

6. Getriebe nach einem der vorangegangenen Ansprüche,
**dadurch gekennzeichnet, dass**
die Lageraufnahmen des Getriebes zur Hälfte im ersten Gehäuseteil (1) ausgebildet sind und die jeweilige andere Hälfte der Lageraufnahmen im zweiten Gehäuseteil (1) ausgebildet sind,
wobei die Lageraufnahmen eine größere Wandstärke aufweisen als die Wandung des restlichen Gehäuseteils (1).

7. Getriebe nach einem der Ansprüche 2 bis 6,
**dadurch gekennzeichnet, dass**
der erste Schenkel des jeweiligen Stegs (4) mit einer Lageraufnahme verbunden ist und der andere Schenkel des jeweiligen Stegs (4) mit einer der Fußplatten (2) des Getriebes.

8. Getriebe nach einem der vorangegangenen Ansprüche,
**dadurch gekennzeichnet, dass**
die Berührfläche der beiden Gehäuseteile (1) in einer Trennebene enthalten ist,
wobei die Fußplatten (2) jeweils parallel zur Trennebene des Getriebes ausgerichtet sind.

9. Getriebe nach einem der vorangegangenen Ansprüche,
**dadurch gekennzeichnet, dass**
jedes Gehäuseteil (1) mit jeweils zwei Fußplatten (2) verbunden ist.

10. Getriebe nach einem der vorangegangenen Ansprüche,
**dadurch gekennzeichnet, dass**
eine erste Getriebestufe des Getriebes eine Winkelgetriebestufe ist
und dass die Kühlrippen (3) parallel zur Drehachse der eintreibenden Welle des Getriebes ausgerichtet sind.

11. Getriebe nach einem der vorangegangenen Ansprüche,
**dadurch gekennzeichnet, dass**
an einer Welle des Getriebes, insbesondere einer Zwischenwelle des Getriebes, eine Wellenendpumpe (6) angeordnet und von der Welle angetrieben ist,
wobei die Wellenendpumpe (6) mit einem Mehrwegeventil (5), insbesondere Dreiwegeventil oder Zweiwegeventil, verbunden ist,
wobei ein erster Anschluss der Wellenendpumpe (6) über das Mehrwegeventil (5), insbesondere abhängig vom Schaltzustand des Mehrwegeventils (5),
- wahlweise mit einer ersten Ölrohrleitung verbunden ist, die in einer durch die Wandung des ersten Gehäuseteils (1) durchgehenden Bohrung mündet,
- oder mit einer zweiten Ölrohrleitung verbunden ist, die in einer durch die Wandung des zweiten Gehäuseteils (1) durchgehenden Bohrung mündet.

12. Getriebe nach Anspruch 11,
**dadurch gekennzeichnet, dass**
der zweite Anschluss der Wellenendpumpe (6) über eine Ölleitung mit einem Ölfilter (21) verbunden ist, von welchem eine weitere Ölleitung zu einer durch das erste Gehäuseteil (1) durchgehenden Bohrung führt.

13. Getriebe nach einem der vorangegangenen Ansprüche,
**dadurch gekennzeichnet, dass**
ein Lüfter mit der eintreibenden Welle verbunden ist,
wobei eine Lüfterhaube mit den beiden Gehäuseteilen (1) verbunden ist und den Lüfter zumindest teilweise gehäusebildend umgibt.

14. Getriebe nach einem der vorangegangenen Ansprüche,
**dadurch gekennzeichnet, dass**
an einem jeweiligen der Gehäuseteile (1) zumindest zwei voneinander beabstandete Fußplatten (2) angeordnet sind.

15. Getriebe nach einem der vorangegangenen Ansprüche,
**dadurch gekennzeichnet, dass**
entweder das erste Gehäuseteil (1) in Gravitationsrichtung unterhalb des zweiten Gehäuseteils (1) angeordnet ist und/oder das erste Gehäuseteil (1) mit seinen Fußflächen auf einer Bodenfläche aufgestellt ist
oder dass das zweite Gehäuseteil (1) in Gravitationsrichtung unterhalb des ersten Gehäuseteils (1) angeordnet ist und/oder das zweite Gehäuseteil (1) mit seinen Fußflächen auf einer Bodenfläche aufgestellt ist.

## Claims

1. A gear unit having two identically configured housing parts (1),
wherein the two housing parts (1) are connected to one another,
wherein base plates (2), for setting up the gear unit on a preferably plane floor surface, are held by elongated members (4) which are connected to a respective housing part (1), in particular connected by welding,
wherein the base plates (2) are spaced apart from the housing part (1),
in particular wherein the base plates (2) are connected to the elongated members (4) by welding,
**characterised in that**
cooling ribs (3) are formed on each housing part (1),
wherein each elongated member (4) surrounds cooling ribs (3) which project between the housing part (1) and the elongated member (4).

2. A gear unit according to claim 1,
**characterised in that**
each elongated member (4) is U-shaped and/or has two limb regions which are spaced apart from one another and which are in each case connected to a yoke of the elongated member (4).

3. A gear unit according to claim 2,
**characterised in that**
the cooling ribs (3) are arranged between the respective yoke and the respective housing part (1).

4. A gear unit according to any one of the preceding claims,
**characterised in that**
the elongated members (4) are spaced apart from one another and are arranged one behind the other along a straight line.

5. A gear unit according to claim 4,
**characterised in that**
the elongated members (4) arranged one behind the other along the straight line are configured identically except for a first elongated member (4), on which additionally a lug is formed, and a second elongated member (4), on which additionally a lug is formed.

6. A gear unit according to any one of the preceding claims,
**characterised in that**
bearing receivers of the gear unit are half in the first housing part (1) and the respective other half of the bearing receivers is in the second housing part (1),
wherein the bearing receivers have a greater wall thickness than the wall of the remaining housing part (1).

7. A gear unit according to any one of claims 2 to 6,
**characterised in that**
the first limb of the respective elongated member (4) is connected to a bearing receiver and
the other limb of the respective elongated member (4) to one of the base plates (2) of the gear unit.

8. A gear unit according to any one of the preceding claims,
**characterised in that**
the contact surface of the two housing parts (1) is contained in a separating plane,
wherein the base plates (2) are each oriented parallel to the separating plane of the gear unit.

9. A gear unit according to any one of the preceding claims,
**characterised in that**
each housing part (1) is connected to two base plates (2) in each case.

10. A gear unit according to any one of the preceding claims,
**characterised in that**
a first gear-unit stage of the gear unit is an angular gear stage
and **in that** the cooling ribs (3) are oriented parallel to the rotational axis of the input shaft of the gear unit.

11. A gear unit according to any one of the preceding claims,
**characterised in that**
a shaft end pump (6) is arranged on a shaft of the gear unit, in particular on an intermediate shaft of the gear unit, and is driven by the shaft,
wherein the shaft end pump (6) is connected to a multi-port valve (5), in particular three-way valve or two-way valve,
wherein a first connection of the shaft end pump (6) is connected via the multi-port valve (5), in particular dependent on the switching state of the multi-port valve (5),
• either to a first oil pipe which opens in a bore passing through the wall of the first housing part (1),
• or to a second oil pipe which opens in a bore passing through the wall of the second housing part (1).

12. A gear unit according to claim 11,
**characterised in that**
the second connection of the shaft end pump (6) is connected via an oil line to an oil filter (21) from which a further oil line runs to a bore passing through the first housing part (1).

13. A gear unit according to any one of the preceding claims,
**characterised in that**
a fan is connected to the input shaft,
wherein a fan cover is connected to the two housing parts (1) and at least partially surrounds the fan in a housing-forming manner.

14. A gear unit according to any one of the preceding claims,
**characterised in that**
at least two base plates (2) spaced apart from one another are arranged on a respective one of the housing parts (1).

15. A gear unit according to any one of the preceding claims,
**characterised in that**
either the first housing part (1) is arranged underneath the second housing part (1) in a gravitational direction and/or the first housing part (1) is set up with its base surfaces on a floor surface
or **in that** the second housing part (1) is arranged underneath the first housing part (1) in a gravitational direction and/or the second housing part (1) is set up with its base surfaces on a floor surface.

## Revendications

1. Transmission avec deux parties de carter (1) identiques l'une à l'autre,
les deux parties de carter (1) étant reliées l'une à l'autre,
des plaques de base (2) permettant le montage de la transmission étant retenues sur une surface de fond de manière préférée plane par des nervures (4) qui sont reliées, en particulier soudées, à une partie de carter (1) respective,
les plaques de base (2) étant espacées par rapport à la partie de carter (1),
les plaques de base (2) étant en particulier soudées aux nervures (4),
**caractérisée en ce que**
des ailettes de refroidissement (3) sont formées sur chaque partie de carter (1),
chaque nervure (4) entourant des ailettes de refroidissement (3) qui passent entre la partie de carter (1) et la nervure (4).

2. Transmission selon la revendication 1,
**caractérisée en ce que**
chaque nervure (4) est en forme de U et/ou présente deux régions de branche espacées l'une de l'autre et reliées respectivement à un étrier de la nervure (4).

3. Transmission selon la revendication 2,
**caractérisée en ce que**
les ailettes de refroidissement (3) sont agencées entre l'étrier respectif et la partie de carter (1) respective.

4. Transmission selon l'une quelconque des revendications précédentes,
**caractérisée en ce que**
les nervures (4) sont espacées les unes des autres et sont agencées les unes derrière les autres le long d'une ligne droite.

5. Transmission selon la revendication 4,
**caractérisée en ce que**
les nervures (4) agencées les unes derrière les autres le long de la ligne droite sont conçues de manière identique les unes aux autres, à l'exception d'une première nervure (4) au niveau de laquelle est formé de manière supplémentaire un œillet, et d'une seconde nervure (4) au niveau de laquelle est formé de manière supplémentaire un œillet.

6. Transmission selon l'une quelconque des revendications précédentes,
**caractérisée en ce que**
des logements de palier de la transmission sont réalisés pour moitié dans la première partie de carter (1) et l'autre moitié respective des logements de palier sont réalisés dans la seconde partie de carter (1),
les logements de palier présentant une épaisseur de paroi supérieure à celle de la paroi du reste de la partie de carter (1).

7. Transmission selon l'une quelconque des revendications 2 à 6,
**caractérisée en ce que**
la première branche de la nervure (4) respective est reliée à un logement de palier et l'autre branche de la nervure (4) respective est reliée à une des plaques de base (2) de la transmission.

8. Transmission selon l'une quelconque des revendications précédentes,
**caractérisée en ce que**
la surface de contact des deux parties de carter (1) est contenue dans un plan de séparation,
les plaques de base (2) étant respectivement orientées parallèlement au plan de séparation de la transmission.

9. Transmission selon l'une quelconque des revendications précédentes,
**caractérisée en ce que**
chaque partie de carter (1) est reliée à respectivement deux plaques de base (2).

10. Transmission selon l'une quelconque des revendications précédentes,
**caractérisée en ce que**
un premier étage de transmission de la transmission est un étage de transmission angulaire
et les ailettes de refroidissement (3) sont orientées parallèlement à l'axe de rotation de l'arbre d'entrée de la transmission.

11. Transmission selon l'une quelconque des revendications précédentes,
**caractérisée en ce que**
une pompe bout d'arbre (6) est agencée sur un arbre de la transmission, en particulier sur un arbre intermédiaire de la transmission, et est entraînée par l'arbre,
la pompe bout d'arbre (6) étant reliée à une vanne multivoies (5), en particulier à une vanne trois voies ou à une vanne deux voies,
un premier raccordement de la pompe bout d'arbre (6) par l'intermédiaire de la vanne multivoies (5) étant, en particulier en fonction de l'état de commutation de la vanne multivoies (5),
- relié de manière facultative à une première conduite d'huile qui débouche dans un alésage traversant la paroi de la première partie de carter (1),
- ou relié à une seconde conduite d'huile qui débouche dans un alésage traversant la paroi de la seconde partie de carter (1).

12. Transmission selon la revendication 11,
**caractérisée en ce que**
le second raccordement de la pompe bout d'arbre (6) est relié par l'intermédiaire d'une conduite d'huile à un filtre à huile (21) à partir duquel une autre conduite d'huile mène à un alésage traversant la première partie de carter (1).

13. Transmission selon l'une quelconque des revendications précédentes,
**caractérisée en ce que**
un ventilateur est relié à l'arbre d'entrée,
un capot de ventilateur étant relié aux deux parties de carter (1) et entourant au moins partiellement le ventilateur de manière à former une enveloppe.

14. Transmission selon l'une quelconque des revendications précédentes,
**caractérisée en ce que**
au moins deux plaques de base (2) espacées l'une de l'autre sont agencées au niveau d'une respective des parties de carter (1).

15. Transmission selon l'une quelconque des revendications précédentes,
**caractérisée en ce que**
soit la première partie de carter (1) est agencée dans le sens de la gravité au-dessous de la seconde partie de carter (1) et/ou la première partie de carter (1) est montée avec ses surfaces de base sur une surface de fond
soit la seconde partie de carter (1) est agencée dans le sens de la gravité au-dessous de la première partie de carter (1) et/ou la seconde partie de carter (1) est montée avec ses surfaces de base sur une surface de fond.
